# EUROPEAN PATENT SPECIFICATION

(11) **EP 0 526 421 B1**
(45) Date of publication and mention of the grant of the patent: **02.04.1997**
(21) Application number: 92830393.2
(22) Date of filing: 17.07.1992
(51) Int. Cl.: G07F 5/24, G07F 1/04

(54) **Rotating drum magazine having horizontal axis for the coin or token collecting and managing unit of an automatic apparatus for dispensing prepaid goods or services**
Sich drehendes Trommelmagazin mit horizontaler Achse für die Münz- oder Markensammel- und Verwaltungseinheit eines Automaten zur Ausgabe von vorausbezahlten Waren oder Ausführen von vorausbezahlten Dienstleistungen
Magasin, en forme d'un tambour rotatif, pour l'unité de ramassage et de gestion de pièces de monnaie ou de jetons d'un appareil automatique de distribution de marchandises ou de services prépayés

(30) Priority: 01.08.1991 IT RM910587
(43) Date of publication of application: 03.02.1993
(73) Proprietor: I.P.M. Industria Politecnica Meridionale - S.p.A., I-80022 Arzano Napoli (IT)
(72) Inventor: Manzoni, Alessandro, I-80144 Napoli (IT)
(74) Representative: Fiammenghi-Domenighetti, Delfina

(56) References cited:
- EP-A- 0 143 972
- DE-A- 3 541 869
- GB-A- 1 245 401
- GB-A- 2 022 897
- GB-A- 2 070 307
- GB-A- 2 097 165

## Description

The present invention relates to an apparatus for automatically dispensing prepaid goods or services and, more particularly, a rotating drum magazine for a coin or token collecting and managing assembly especially adapted to be used in a public pay phone operating with different coins.

From Italian Patent No. 1.181.630 granted on 30.09.1987 to the same Applicant a rotating drum magazine is known including a drum rotating about a vertical axis and having a plurality of narrow sections equal to one another and radially disposed at the same angular intervals along the periphery of the drum. Each section is intended to receive a coin or a token falling down by gravity along a feed duct leading over the drum and having an outlet port generally communicating in succession with any section as the drum rotates. Each section is closed at the lower side so as to be opened by a rocking lever, thus forming a pocket containing the coin. A mechanism actuating all of the levers is provided for selectively opening the pockets. Both the mechanism for actuating the levers and the drum, the angular positions of which are sensed by appropriate coding discs, are rotatable step by step under control of stepping motors operated by electromagnetic means. The operation of the magazine, i.e. the rotation of the drum and the selective opening of the pockets, is controlled by an electronic control unit.
The above described known magazine can be used in many prepayment machines due to its capability of accepting coins or tokens of different size and controlling the payment, i.e. the collection and/or the return of the coins, so as to be approximately proportionate to the amount of dispensed goods or duty performed. Such features are particularly advantageous in case of application of the magazine to public pay phones.
Especially in such application, however, mechanisms are needed which require for their operation as a limited amount of electric power as possible. The specifications of the telephone companies require that the power supply is derived from the battery of the exchange through the line pair. As the maximum current which can be supplied through the line pair is very little (a few milliamperes) each pay phone needs a rechargeable buffer battery which is charged by the small line current during the generally long non-operating times and is adapted to supply a relatively high electric power for a short time during the operation of the pay phone. The buffer battery, however, is a relatively expensive component which should be periodically replaced; therefore it would be desirable to be able to manage without it.

DE 3541869 A1 discloses a coin storage and managing mechanism in which a plurality of pockets are provided which are apt to store coins on the lower half of the drum magazine.
This arrangement does not systematically exploit the weight of coins in order to give a contribution to the driving mechanism of the drum, acting against the inertia of the drum and frictional forces. Moreover all coins, even non-valid coins are loaded on the drum, since the coin selector is located along the feed duct terminating into one of the drum pockets.

GB-2 097 165 A discloses a coin handling mechanism provided with a turnstile, for preventing that a coin to be refunded follows a coin to be collected or viceversa.

European Patent Application No. 0 143 972 A2, discloses a rotatable coin collection and change giving assembly, in which a conical stationary inner surface and a clindrical stationary outer surface are used for holding the coins inside the pockets of the rotating drum.

GB-A-1 245 401 discloses a simple advancement ratchet mechanism provided with spring biased pawls.

An object of the present invention is of providing a public pay phone or other automatic prepayment dispensing apparatus comprising an electromechanical assembly for collecting and managing coins or tokens which can be supplied with a very little amount of electric power for
its operation.
A more general object of the invention is of providing a rotating drum magazine for a coin or token collecting and managing assembly of an automatic prepayment dispensing apparatus which operates with a little inner power source.
Such objects are achieved by a rotating drum magazine described and characterized in the claims appended to the present description.

This invention will be better understood from the following detailed description of an illustrative, non-limitative embodiment of a rotating drum magazine for an electromechanical assembly of a public pay phone. In the drawings:
Fig. 1 is a simplified perspective view of the rotating drum magazine according to an embodiment of the invention;
Fig. 2 is a vertical section of the drum magazine according to the invention;
Fig. 2a is a plan view of the magazine shown in Fig. 2;
Fig. 3 is a front view of the magazine with a broken-away front side;
Figs. 3a, 3b, 3c and 3d are plan views of some details of the magazine shown in Fig. 3;
Fig. 4 is a horizontal section of the drum magazine;
Fig. 5 is a front view of the drum magazine;
Fig. 6 is a horizontal section view of the drum magazine along different planes;
Fig. 7 is a vertical section view of the drum magazine showing several operating conditions; and
Figs. 7a, 7b are rear and front views of the drum, respectively.

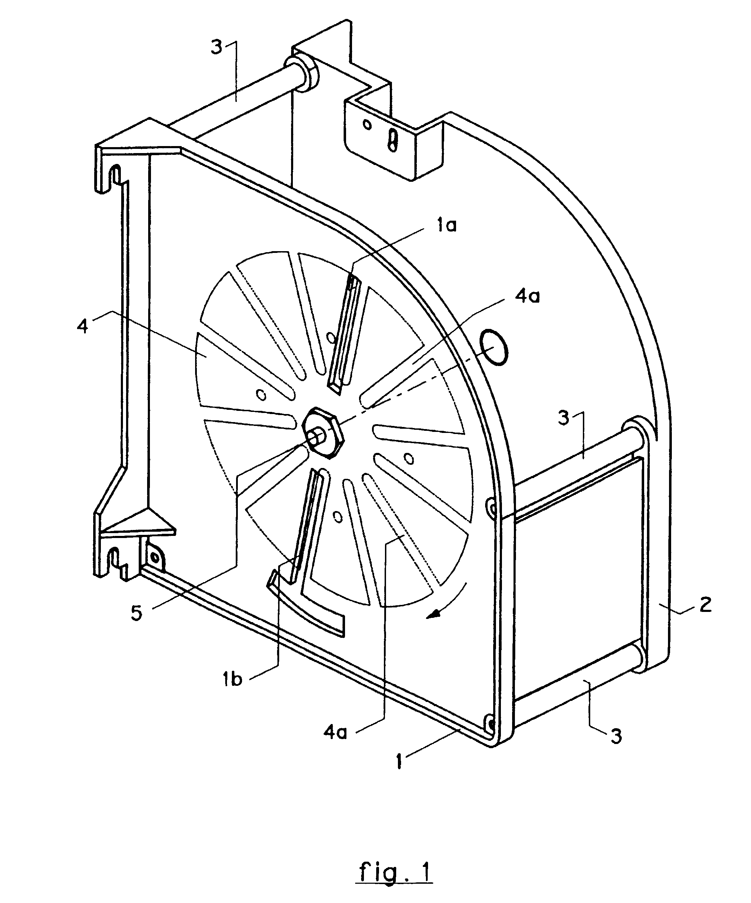

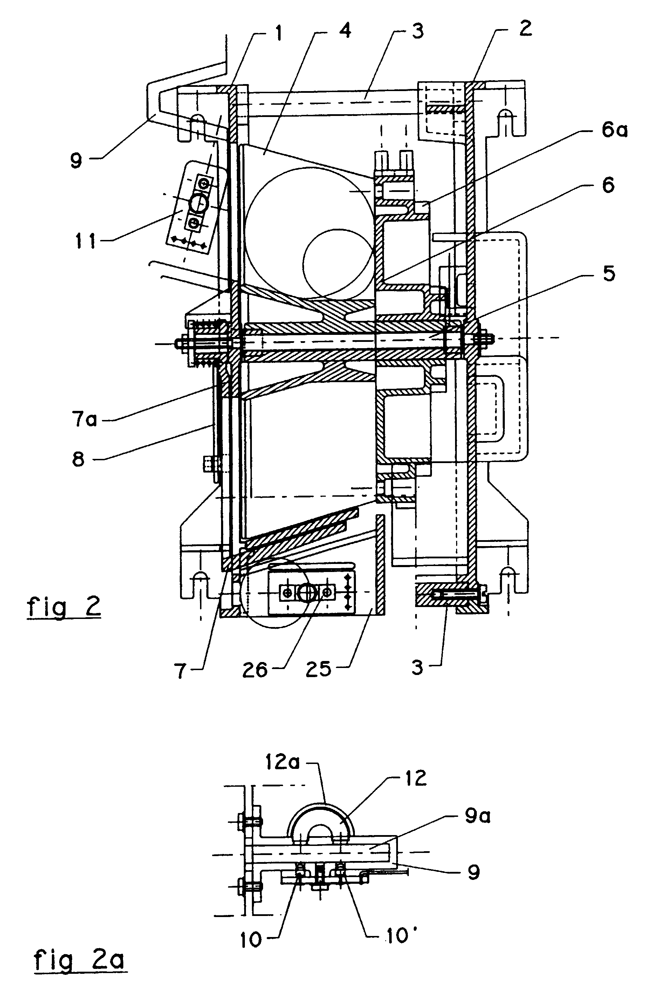

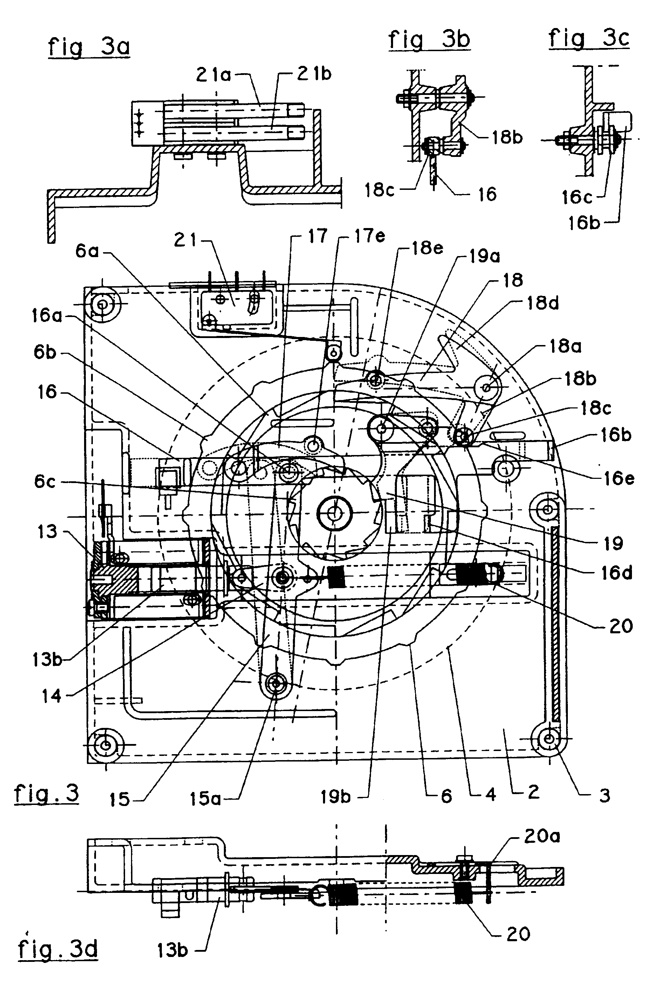

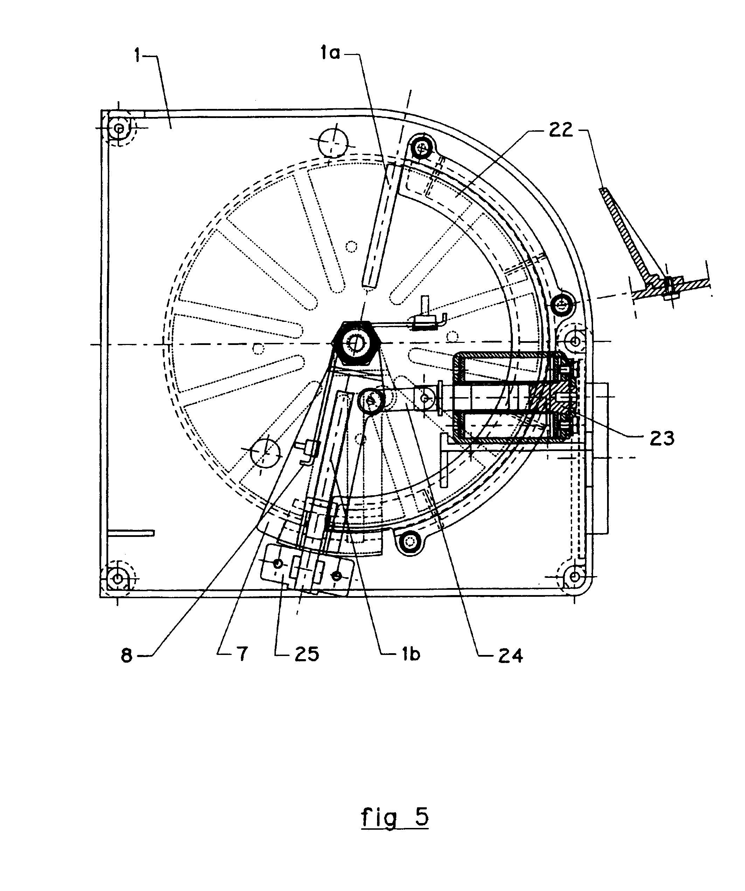

As seen in Fig. 1 the assembly of the drum magazine includes a mounting structure having a front side 1, a rear side 2, spacer posts 3, an inlet slot 1a in the front side for the coins to be received in the drum, an outlet slot 1b for the coins to be returned, a receiving drum 4 only the front side of which behind front side 1 is shown by dashed lines, and a rotating shaft 5 of the drum.
Components 1, 2, 3, 4, 5 already described with reference to Fig. 1 are shown in Fig. 2 together with a ratchet gear wheel 6a, best seen in Fig. 3, which is integral with a shaped disc 8 integral in turn with drum 4, a gate 7 formed of a plate which is movable along the periphery of drum 4 by an arm 7a pivoted about shaft 5, and a torsion spring 8 for returning gate 7 best seen in Fig. 5.
As seen in Figs. 1 and 2 drum 4 has the form of a truncated cone and is provided with radial pockets 4a opened to the front wall and the side surface. A conical segment 22 fitting the side periphery of the drum closes sidewise the sections 4a along half a length of the periphery of the drum so that such sections form pockets adapted each to contain a coin. Two coins of different size are shown by way of example in an upper pocket in Fig. 2.
In Fig. 2 there is also shown the end length of a coin feed duct 9 which leads to slot is of front side 1 of the drum mounting structure, thus allowing a coin to be guided by gravity into that pocket of the drum which faces slot is. A photoelectric detector 11 is provided near the outlet port of duct 9 so as to supply a signal to a control unit (not shown) whenever a coin is let into the drum.
It should be appreciated that according to the invention only some pockets of the drum, half in the illustrated embodiment, are in practice used because the drum is essentially caused to rotate by potential energy due to the weight of the coins let into the duct, such energy being always positive in order to reduce as much as possible the need of auxiliary power sources.
Fig. 3 shows the kinematic motion of the rotating drum. In order to show the mechanism front side 1 is broken away and some details are seen through. There are shown details 2, 3, 4, 6, 6a already described with reference to Figs. 1 and 2 as well as an electromagnet 13 with a moving core 13b, a plate 14 linking with some clearance moving core 13b to a lever 15 pivoted at one end about a pin 15a, a sliding rod 16, and a drum ratchet pawl 17 pivoted about rod 16. Lever 15 is connected to rod 16 at 16a by means of a suitably slack articulated joint, and pawl 17 engages a ratchet wheel 6c integral with disc 6.
A ratchet pawl or sequencer 18 of gear 6a is further shown. Pawl 18 pivoted at 18a has two arms: one arm 18b controlled through roller 18c by rod 16 (see Fig. 3b), and a second arm 18d for manually releasing the drum. Pawls 17 and 18 have each a counterweight 17e and 18e, respectively, to return to their original position by gravity. Following details are also shown: a ratchet pawl 19 pivoted at 19a and provided with a safety tang 19b to prevent disc 6 from being rotated without control, and an extension spring 20 connected between a fixed point of the mounting structure and lever 15.
As seen in particular in Fig. 3c rod 16 sliding on a mounting roller 16c has a bent portion 16b for manually controlling the rod itself and a bent portion 16d for locking tang 19b of ratchet pawl 19.
At the upper part of rear side 2 there is shown a block 21 carrying two microswitches 21a and 21b which are electrically connected to the control unit (not shown).
They are controlled by teeth formed at the periphery of disc 6 on two parallel planes, and namely microswitch 21a is controlled by one tooth placed on one plane and microswitch 21b is controlled by a succession of teeth 6b placed on the other plane at regular intervals equal to the angular spacing between two pockets 4a of the drum.

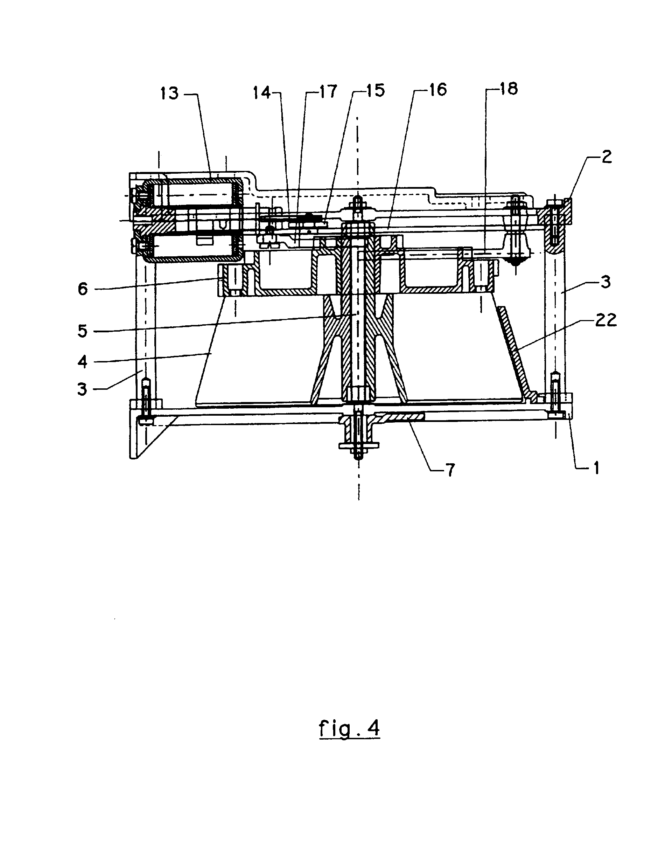

Fig. 3a shows a plan view of said electrical microswitches: microswitch 21a, which is operated at every turn of the receiving drum, supplies the control unit with an information about the starting position, and microswitch 21b supplies the same control unit with an information about the angular shift (step) of coin receiving drum 4. Finally Fig. 3d shows spring 20 with its engaging arm 20a adjusting the tension of the spring. Fig. 4 is a horizontal section of the drum which is simplified for best showing the internal mechanisms.
There are shown sides 1, 2, spacer posts 3, drum 4, shaft 5, disc 6, gate 7, electromagnet 13 controlling the stepwise movement through pawl 17, and rod 16 lifting sequencer pawl 18. Conical segment 22 retaining the coins on the periphery of the drum is also shown.
Fig. 5 shows coin input slot is, retaining conical segment 22, and output slot 1b for returning the coins.
An electromagnet 23 controls through a plate 24 gate 7 which is returned by spring 8.

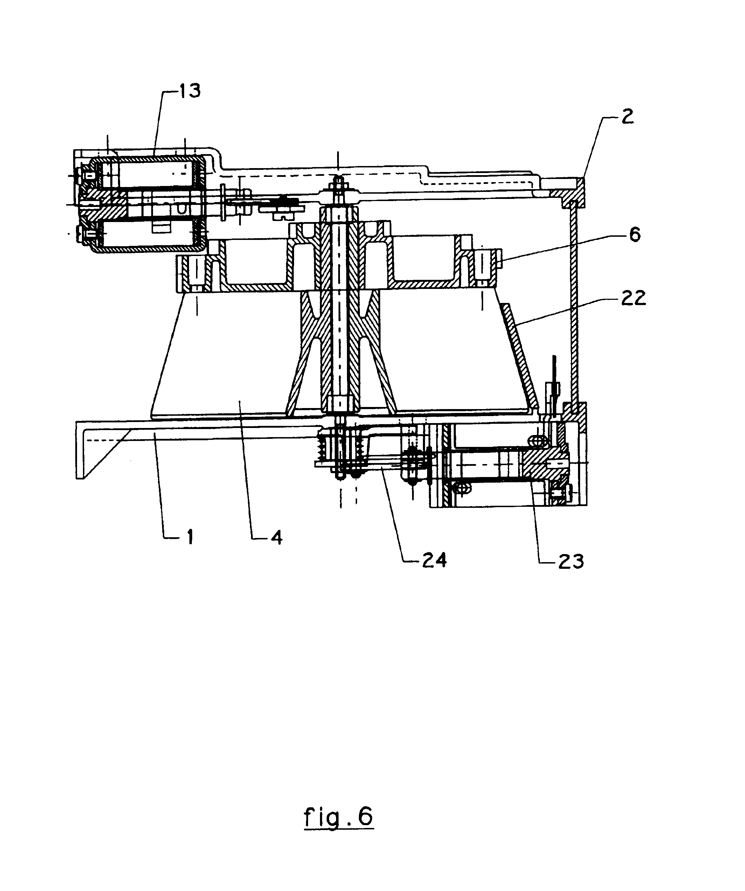

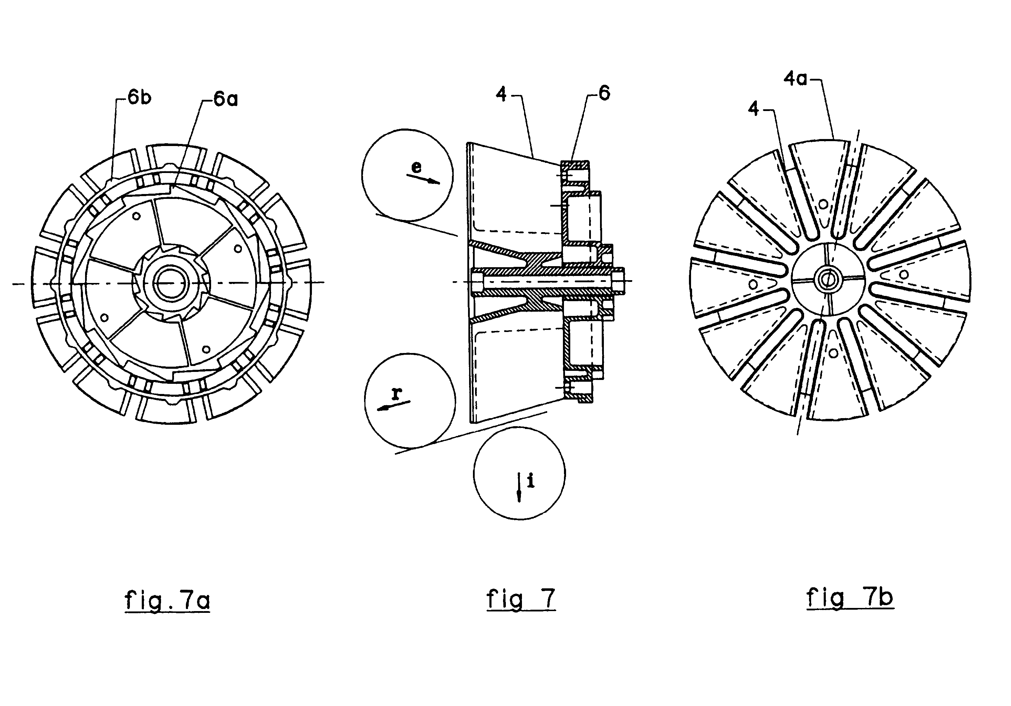

Fig. 6 is a horizontal section along different planes which better illustrates as described above. Fig. 7 shows a coin (e) which is being introduced into the receiving drum 4, a coin (r) which is being returned, and a coin (i) which is being cashed after the operation of gate 7.
It should be appreciated that the return position (r) and cash position (i) can be exchanged, if necessary, depending upon the length covered by the coins within the apparatus. Fig. 7b is a front view of the drum with the receiving pockets; Fig. 7a is a rear view showing the feed and control toothings.
The operation of the collecting assembly is now described in particular for the use in a public pay phone.
A coin put in a pay phone through the inlet slot is recognized and sorted by a coin selector (not shown) which then operates a gate for conveying said coin to feed duct 9.
Photoelectric detector 11 at the input slot is connected to the receiving drum 4 is responsive to the control unit for operating the drum. The control unit energizes feed controlling electromagnet 13 by an electric pulse of predetermined length. Lever 15 operated by electromagnet core 13b rotates anticlockwise according to the view of Fig. 3 so that rod 16 slides leftwards. At the same time spring 20 is extended so as to accumulate energy, and ratchet pawl 17 is driven by rod 16 so as to pass over a tooth of gear 6c. Pawl 18 is rotated clockwise by rod 16 and slides on roll 18c of arm 18b with its upper edge 18e disengaging the latter from gear 6a. The rotation of disc 6 without control is prevented by ratchet pawl 19. At the end of the electric pulse the electromagnet is deenergized and spring 20 rotates lever 15 clockwise. The latter drives rod 16 together with pawl 17 rightwards so that such pawl engages gear 6c integral with receiving drum 4.
After one step sequencer pawl 18, which is not held any longer in a raised position by upper edge 16e of rod 16 engages a tooth of gear 6a.
In the embodiment shown in Fig. 3 drum 4 is caused to rotate clockwise besides by the above described ratchet gear operated by electromagnet 13 also by the weight of the coins in the pockets of drum 4. In other words the pulsing electric power for energizing the electromagnet and for extending spring 20 is added to the potential energy due to the weight of the coins contained in the pockets for causing the collecting drum to rotate. The electric power necessary for operating the drum magazine is very low and can be directly derived from the telephone line without the need of expensive buffer batteries.
Coins coming out of drum 4 can follow two ways: one way leading to a not shown return duct through slot 1b of front side 1, the second way leading to duct 25 the outlet of which is under the drum. The inlet port of said duct can be opened or closed by gate 7. Therefore, when electromagnet 23 is deenergized, collection duct 25 is closed and any coin in the overlying pocket falls down to the return duct through slot 1b, and when electromagnet 23 is energized just before the rotation of the drum, collection duct 25 is opened and the coin falls down therein. A photoelectric detector 26 senses the coin and sends a corresponding signal to the logic control unit. It should be appreciated that the electric power for operating the gate is very small and is consumed only for collection operations. For returning coins only the weight of the same is used.
Photoelectric detectors 11 and 26 are of the double-control type to allow coins of different size to be detected. In particular, the detectors used in the embodiment of the invention are formed, as illustrated in Fig. 2a showing the detector of feed duct 9, by a signal emitter and a signal receiver 10 and 10', respectively, which are placed on the same side of duct 9 and by an optical guide 12 placed on the opposite side of duct 9 with its two ends facing the signal emitter and the signal receiver, respectively. Advantageously optical guide 12 is formed by a semiannular molded piece of transparent plastic material having a high refractive index which allows the light to be guided within the thickness of said optical guide protected by a lining 12a due to the total reflection on the internal faces of the guide.
As already mentioned the control unit receives from a recognizing device an input information relative to the value of the coins inserted into the apparatus as well as from microswitches 21a, 21b an information about the angular position of the pocket of the rotating drum receiving the coin. Control unit has also an information stored in its memory about the amount to be paid for the supplied goods or service, said information being received, for example, from the exchange in case of a pay phone, and compares the value of the coins with said amount and collects or returns the coins under appropriate control signals fed to the electromagnet for opening the gate.
It should be appreciated that for maintenance and control reasons the above described drum rotation mechanism allows both the stepwise rotation to be manually actuated by pushing rod 16 against spring 20 and by next releasing the same, and the drum to be continuously rotated due to the disengagement of pawl 18.
Although only one embodiment of the invention is illustrated and described it is evident that several changes and modifications can be made in the scope of the present invention. For example, mechanical energy supplied from the outside by the same user or other energy under different form may be used instead of electric power for integrating the potential energy supplied by the weight of the coins.

## Claims

1. A rotating drum magazine particularly adapted to be used in an electromechanical assembly for collecting and managing coins or tokens of an automatic goods or service dispensing apparatus, comprising:
- a rotating drum (4) with a substantially horizontal axis having a plurality of narrow pockets (4a) for containing coins or tokens radially located at equal angular intervals and opened at one of the drum base walls (1);
- a coin or tokens feed duct (9) leading to said base wall (1) with an outlet opening (4a) which is substantially connected to each pocket (4a) during the rotation of the drum;
- means (13-19; 6a, 6c) for controlling the rotation of the drum (4) according to stepwise angular shifts corresponding to the angular intervals between pockets (4a);
characterized in that the drum (4) has essentially the form of a truncated cone, the greater base of which is the base wall (1) of the drum, whereby the loading of coins or tokens into the pockets (4a) through feed duct (9) causes a couple to be applied by gravity to half of the drum which is thereby rotated about its axis; said half being defined by the feed duct (9) leading to the upper part of drum (4), on a plane inclined to the vertical, the inlet parts of a return duct and by a collection duct (25) being near the lower part of the drum (4), on said vertical plane.

2. The magazine of claim 1, characterized in that the duct for the coin to be returned and the duct (25) for the coins to be collected are such that their inlet parts communicate with each pocket (4a) during rotation of the drum (4), and the coins being fed by gravity; a switching assembly (7-7a, 8) preferably operated by an electromagnet (23) being adapted to selectively feed coins either to the return duct or the collection duct (25).

3. The magazine of claim 2, characterized in that photovoltaic sensors (11, 26) for sensing coins or tokens are located both in the feed duct (9) and collection duct (25).

4. The magazine of claims 2 and 3, characterized in that pockets (4a) are opened towards the side wall of the drum (4) comprising a lateral closure member (22) extending along at least a portion of the periphery of the drum near the side wall of the same to form a supporting wall for the coins, whereby the inlet part of the return duct is facing the base wall of the drum (4) and the inlet part of the collection duct (25) is located under the side wall of the drum near one end side of the lateral closure member (22), and the switching assembly (7-7a, 8) includes a gate (7) movable between the inlet part of collection duct (25) and the side wall of drum (4).

5. The magazine of any preceding claim, characterized in that means (13-19, 6a, 6c) for adjusting the rotation of the drum (4) includes a ratchet gear (17, 6c, 18, 6a) and drive means (13-16, 20) of said ratchet gear, whereby said ratchet gear (17, 6c, 18, 6a) includes two gears (6c, 6a) integral and coaxial with drum (4) and having teeth disposed at regular intervals like those between pockets (4a), a feed pawl (17) and a ratchet pawl (18), the feed pawl (17) engaging a first ratchet gear (6c), and a pawl (18) engaging a second gear (6a).

6. The magazine of claim 5, characterized in that drive means (13-16, 20) of ratchet gear (17, 6c, 18, 6a) includes an electromagnet (13) having a movable core (13b) mechanically coupled to feed pawl (17), and spring means (20) contrasting electromagnet (13) and being also coupled to feed pawl (17).

7. The magazine of claim 6, characterized in that the mechanical coupling between moving core (13b) of electromagnet (13) and feed pawl (17) is provided by a rod (16) sliding transversally to the axis of drum (4) between a rest position and an operating position, and an arm of a lever (15) which is pivoted at one end about a pin (15a) fixed with respect to the drum and engages at the other end said sliding rod (16) and is coupled at its middle point to moving core (13b) of electromagnet (13), feed pawl (17) being pivoted about sliding rod (16) at such a position as to engage first gear (6c) when sliding rod (16) is shifted from the rest position to the operating position.

8. The magazine of claim 7, characterized in that ratchet pawl (18) is pivoted about drum (4) at a fixed position and engages sliding rod (16), said sliding rod (16) being shaped so as to shift ratchet pawl (18) from an engaging position on the respective gear (6a) to a disengaging position.

9. The magazine of claim 7 or 8, characterized in that said means (13-19, 6a, 6c) for adjusting the rotation of drum (4) includes a safety ratchet pawl (19) adapted to engage first gear (6c), sliding rod (16) being shaped so as to engage said safety ratchet pawl (19) in the operating condition for holding the same engaged with first gear (6c).

10. The magazine of any claim 5 to 9, characterized in that said pawls (17, 18, 19) are shaped and mounted so as to be held in the respective engaging positions by gravity.

11. The magazine of any preceding claim, characterized in that it further includes means (6b, 21) capable to sense the angular position of drum (4).

12. The magazine of claim 11, characterized in that said means (6b, 21) for sensing the angular position of drum (4) includes at the periphery of the latter turn indicating marking means and a plurality of step indicating marking means (6b) at regular intervals corresponding to those between pockets (4a) of drum (4) as well as a first microswitch (21a) adapted to be operated by said turn indicating marking means, and a second microswitch (21b) adapted to be operated by said step indicating marking means (6b).

13. Electromechanical assembly comprising a rotating drum magazine according to the preceding claims, characterized in that it includes a device for recognizing the value of the coins or tokens, memory means storing an information about the amount to be paid, and a logic control unit connected to said memory means, said photoelectric sensors (11, 26) of feed duct (9) and collection duct (25), said microswitches (21) operated by turn and step indicating marking means (6b), said electromagnet (23) operating feed pawl (17), and said electromagnet (23) operating switching device (7, 7a, 8), said logic control unit being further adapted to carry out the following operations: energizing electromagnet (13) which operates feed pawl (17) in response to a signal from sensor (11) of feed duct (9); correlating the value of the coin or token to the angular position of the respective pocket (4a) in which said coin or token is contained; comparing the value of the coins or tokens received in drum (4) with the amount to be paid; and energizing electromagnet (23) for operating switching device (7, 7a, 8) as a result of said comparison.

## Patentansprüche

1. Sich drehendes Trommelmagazin das insbesondere in einer elektromechanischen Muenz- oder Markensammel- und Verwaltungseinheit eines Automaten zur Ausgabe von Waren oder zum Ausfuehren von Dienstleistungen verwendet wird, derart dass es folgende Teile umfasst: -eine sich drehende Trommel (4) mit einer im wesentlichen horizontal angeordneten Achse, mit einer Mehrzahl von engen Taschen (4a), welche radial ausgerichtet sind und Muenzen bzw. Marken enthalten, wobei diese Taschen in gleichen Winkelabstaenden angeordnet und offen auf der Seite einer Basis (1) der Trommel sind;
- einen Zufuehrkanal (9) fuer die Marken bzw. Muenzen der zu der genannten Basiswand (1) fuehrt, welcher eine Ausgangsoeffnung (4a) aufweist, die im wesentlichen nach jeder Drehung der Drommel zu jeder Tasche (4a) fluchtet;
- Mittel (13-19; 6a, 6c), die zum Steuern der Drehbewegung der Trommel (4) dienen, in Uebereinstimmung mit einer schrittweisen Winkelbewegung, entsprechend den Winkelabstaenden zwischen den Taschen (4a);
dadurch gekennzeichnet, dass die Trommel (4) im wesentlichen wie ein Kegelstumpf ausgebildet ist, mit einer groesseren Basis, welche die Basiswand (1) der Trommel bildet, wobei die Zufuhr von Muenzen bzw. Marken in die Taschen (4a) durch den Zufuehrkanal (9) als Folge hat, dass ein Schwerkraftdrehmoment auf die eine Haelfte der Trommel wirkt und sich die letztere um ihre Achse dreht, welche Haelfte definiert ist durch den genannten Zufuehrkanal (9), der in den oberen Teil der Trommel (4) muendet und auf einer zur Vertikalen geneigten Ebene liegt, und darueberhinaus durch die inneren Teile eines Rueckgabekanals, und durch einen Sammelkanal (25) der auf der genannten vertikalen Ebene in der Naehe des unteren Beriches der Trommel (4) liegt.

2. Trommelmagazin nach Anspruch 1, dadurch gekennzeichnet, dass der Kanal fuer die Muenzenrueckgabe und der Kanal fuer die Muenzensammlung (25) so ausgebildet sind dass ihre inneren Teile nach jeder Drehung der Trommel (4) mit jeder Tasche (4a) kommunizieren, und die Muenzen durch die Schwerkraft bewegt werden; wobei eine Schiebereinheit (7-7a, 8), die vorzugsweise durch einen Elektromagneten (23) betaetigt wird, dazu verwendet wird, die Muenzen selektiv in Richtung des Rueckgabekanals oder des Sammelkanals (25) zu foerdern.

3. Trommelmagazin nach Anspruch 2, dadurch gekennzeichnet, dass photoelektrische Sensoren (11, 26) als Detektoren der Muenzen oder der Marken verwendet werden und in den Zufuehrkanal (9) bzw. den Sammelkanal (25) angeordnet sind.

4. Trommelmagazin nach Anspruch 2 und 3, dadurch gekennzeichnet, dass die Taschen (4a) offen in Richtung der Seitenwand der Trommel (4) sind, und die letztere ein seitliches Verschlusselement (22) aufweist, welches sich mindestens entlang eines Teils des Trommelumfangs erstreckt, nahe dessen Seitenwand, und dabei eine Stuetzwand fuer die Muenzen bildet, wobei der Eingang des Rueckgabekanals gegenueber der Basiswand der Trommel (4) und der Eingang des Sammelkanals (25) unterhalb der Trommelseitenwand liegen, in der Naehe eines Endes des seitlichen Verschlusselementes (22), und wobei die Schiebereinheit (7-7a, 8) eine zwischen dem Eingang des Sammelkanals (25) und der Seitenwand der Trommel (4) bewegbare Schleuse (7) besitzt.

5. Trommelmagazin nach einem der vorhergehenden Ansprueche, dadurch gekennzeichnet, dass die Mittel (13-19, 6a, 6c) zum Steuern der Drehbewegung der Trommel (4) ein Sperrgetriebe (17, 6c, 18, 6a) und Antriebsmittel (13-16,20) des Sperrgetriebes aufweisen, derart dass das Sperrgetriebe (17, 6c, 18, 6a) zwei Getriebe (6c, 6a), die einstueckig und koaxial auf der Trommel (4) ausgeformt sind, umfasst, wobei diese Getriebe Zaehne besitzen, die in regelmaessigen Abstaenden wie die Abstaende zwischen den Taschen (4a) angeordnet sind, und wobei eine Sperrklinke (17) und ein Betaetigungszahn (18) hinzukommen, so dass die Sperrklinke (17) mit einem ersten Sperrgetriebe (6c) und der Betaetigungszahn (18) mit einem zweiten Sperrgetriebe (6a) in Eingriff kommen.

6. Trommelmagazin nach Anspruch 5, dadurch gekennzeichnet, dass die Antriebsmittel (13-16, 20) des Sperrgetriebes (17, 6c, 18, 6a) einen Elektromagneten (13) mit bewegbarem und mit dem Betaetigungszahn (17) mechanisch gekoppeltem Kern (13b) besitzen, und darueberhinaus elastische Mittel bzw. Federn (20) aufweisen, die dem Elektromagneten (13) entgegenwirken und die auch mit dem Betaetigungszahn (17) gekoppelt sind.

7. Trommelmagazin nach Anspruch 6, dadurch gakennzeichnet, dass die mechanische Verbindung zwischen dem bewegbaren Kern (13b) des Elektromagneten (13) und dem Betaetigungszahn (17) durch einen Stab (16) hergestellt ist, welcher quer zur Achse der Trommel (4) gleitet, zwischen einer Ruhe- und einer Arbeitsposition, und darueberhinaus durch einen Hebelarm (15), der an einem Ende an einem Gelenkzapfen (15a) rotierbar angebracht ist, der fest an der Trommel liegt, am anderen Ende mit dem genannten Gleitstab (16) verbunden ist, und in der Mitte mit dem bewegbaren Kern (13b) des Elektromagneten (13) in Verbindung steht, wobei der Betaetigungszahn (17) an dem Gleitstab (16) in einer solchen Stelle angelenkt ist, dass er mit dem ersten Sperrgetriebe (6c) in Eingriff kommt, wenn der Gleitstab (16) von der Ruhein die Arbeitsposition gelangt.

8. Trommelmagazin nach Anspruch 7, dadurch gekennzeichnet, dass die Sperrklinke (18) in einer festen Stelle an der Trommel (4) angelenkt ist und mit dem Gleitstab (16) in Eingriff kommt, und der Gleitstab (16) so gestaltet ist, dass er die Sperrklinke (18) von der Eigriffslage auf dem entsprechenden Sperrgetriebe (6a), in die Ausklinklage bewegt.

9. Trommelmagazin nach Anspruch 7 oder 8, dadurch gekennzeichnet, dass die Mittel (13-19, 6a, 6c) zum Steuern der Drehbewegung der Trommel (4) eine Sicherheitssperrklinke (19) aufweisen, die mit dem ersten Getriebe (6c) in Eingriff kommt, wobei der Gleitstab (16) so gestaltet ist, dass er in der Arbeitsposition mit der Sicherheitssperrklinke (19) in Beruehrung kommt, so dass die letztere in Eigriff mit dem ersten Getriebe (6c) bleibt.

10. Trommelmagazin nach Anspruch 5 bis 9, dadurch gekennzeichnet, dass die genannten Zaehne und Sperrklinken (17, 18, 19) so ausgebildet und angebracht sind, dass sie in die jeweilige Lage durch die Schwerkraft gehalten werden.

11. Trommelmagazin nach einem der vorhergehenden Ansprueche, dadurch gekennzeichnet, dass es Mittel (6b, 21) aufweist, welche als Fuehler fuer die jeweilige Winkellage der Trommel (4) wirken.

12. Trommelmagazin nach Anspruch 11, dadurch gekennzeichnet, dass die genannten Mittel (6b, 21) zum Fuehlen der Winkellage der Trommel (4), aus Markierungsmitteln fuer die Umdrehungen derselben, welche auf ihrem Umfang angeordnet sind, bestehen, sowie aus Markierungsmitteln (6b) fuer jeden Schritt der Winkeldrehung, die in regelmaessigen Abstaenden angeordnet sind, entsprechend den Winkelabstaenden zwischen den Taschen (4a) der Trommel (4), und dass ein erster Mikroschalter (21a) vorgesehen ist, der mit den genannten Markierungsmitteln fuer die Umdrehungen zusammenwirkt, sowie ein zweiter Mikroschalter (21b), der mit den jeden Schritt der Winkeldrehung anzeigenden Markierungsmitteln zusammenwirkt.

13. Elektromechanische Einheit, bestehend aus einem rotierbaren Trommelmagazin nach den vorhergehenden Anspruechen, dadurch gekennzeichnet, dass es folgende Elemente aufweist:
- eine Vorrichtung, die den Wert der Muenzen oder Marken erkennt, Speicher zum Speichern der Information ueber den zu entrichtenden Geldbetrag, und eine logische Steuereinheit, die mit diesen Speichern verbunden ist, sowie die genannten photoelektrischen Sensoren (11, 26) des Zufuehrkanals (9) und des Sammelkanals (25), die genannten Mikroschalter (21), die durch die Markierungsmittel (6b) fuer die Umdrehungen und die Schritte der Trommel betaetigt werden, den genannten Elektromagneten (23), der den Betaetigungszahn (17) bewegt, und den genannten Elektromagneten (23), der die Schiebereinheit (7, 7a, 8) betaetigt, wobei die genannte logische Steuereinheit noch dazu die folgenden Operationen ausfuehren kann: Betaetigung des Elektromagneten (13), der den Betaetigungszahn (17) bewegt, als Folge eines Signals von den Sensoren (11) des Zufuehrkanals (9); den Wert der Muenze oder der Marke in Beziehung setzen zu der Winkellage der entsprechenden Tasche (4a), in welcher diese Muenze oder Marke enthalten ist; Vergleich zwischen dem Wert der Muenzen oder Marken in der Trommel (4) mit dem zu entrichtenden Geldbetrag, und Betaetigung des Elektromagneten (23) und damit der Schiebereinheit (7, 7a, 8) als Folge dieses Vergleichs.

## Revendications

1. Magasin en forme de tambour rotatif particulièrement conçu pour une utilisation dans une unité électromécanique de ramassage et de gestion de pièces de monnaie ou de jetons d'un appareil automatique de distribution de marchandises ou de services, comprenant :
- un tambour rotatif (4) à axe pratiquement horizontal, présentant plusieurs poches étroites (4a) destinées à contenir des pièces de monnaie ou des jetons disposés radialement à des intervalles angulaires égaux et couvertes à l'une des parois (1) de la base du tambour ; - un conduit d'alimentation (9) en pièces de monnaie ou en jetons menant à la dite paroi de base (1) avec une ouverture de sortie (4a) qui est substantiellement reliée à chaque poche (4a) pendant la rotation du tambour ;
- des moyens (13-19 ; 6a, 6c) de commande de la rotation du tambour (4) selon des déplacements angulaires échelonnés correspondant aux intervalles angulaires entre les poches (4a) ;
caractérisé en ce que le tambour (4) a pour l'essentiel une forme en tronc de cône, dont la grande base est constituée par la paroi de base (1) du tambour, de sorte que le chargement de pièces de monnaie ou de jetons dans les poches (4a) par l'intermédiaire du conduit d'alimentation (9) provoque l'application par gravité d'un couple à la moitié du tambour qui est ainsi entraîné en rotation autour de son axe ; la dite moitié étant déterminée par le conduit d'alimentation (9) menant à la partie supérieure du tambour (4), sur un plan incliné à la verticale, par les parties d'entrée d'un conduit de retour et par un conduit de ramassage (25) proche de la partie inférieure du tambour (4), sur le dit plan vertical.

2. Magasin selon la revendication 1, caractérisé en ce que le conduit de renvoi des pièces de monnaie et le conduit (25) de ramassage des pièces de monnaie sont tels que leurs parties d'entrée communiquent avec chaque poche (4a) pendant la rotation du tambour (4), et l'alimentation des pièces de monnaie s'effectuant par gravité ; un ensemble de commutation (7-7a, 8) de préférence actionné par un électroaimant (23) étant conçu pour alimenter sélectivement en pièces de monnaie soit le conduit de retour, soit le conduit de ramassage (25).

3. Magasin selon la revendication 2, caractérisé en ce que des capteurs photovoltaïques (11, 26), destinés à capter des pièces de monnaie ou des jetons, sont disposés à la fois dans le conduit d'alimentation (9) et dans le conduit de ramassage (25).

4. Magasin selon les revendications 2 et 3,
caractérisé en ce que les poches (4a) sont ouvertes vers la paroi latérale du tambour (4) comprenant un élément de fermeture latéral (22) s'étendant le long d'au moins une partie de la périphérie du tambour près de la paroi latérale de celui-ci pour former une paroi de support pour les pièces de monnaie, de sorte que la partie d'entrée du conduit de retour fait face à la paroi de base du tambour (4) et la partie d'entrée du conduit de ramassage (25) est disposée sous la paroi latérale du tambour près d'un côté d'extrémité de l'élément de fermeture latéral (22), et l'ensemble de commutation (7-7a, 8) comprend une porte (7) mobile entre la partie intérieure du conduit de ramassage (25) et la paroi latérale du tambour (4).

5. Magasin selon l'une quelconque des revendications précédentes, caractérisé en ce que les moyens (13-19, 6a, 6c) de réglage de la rotation du tambour (4) comprennent un système de roue à rochet (17, 6c, 18, 6a) et un moyen d'entraînement (13-16, 20) du dit système de roue à rochet, de sorte que le dit système de roue à rochet (17, 6c, 18, 6a) comprend deux pignons (6c, 6a) en un seul élément avec le tambour (4) et coaxiaux avec lui et présentant des dents disposées à intervalles réguliers similaires à ceux séparant les poches (4a), un cliquet d'alimentation (17) et un cliquet de roue à rochet (18), le cliquet d'alimentation (17) engageant une première roue à rochet (6c), et un cliquet (18) engageant un second pignon (6a).

6. Magasin selon la revendication 5,
caractérisé en ce que les moyens d'entraînement (13-16, 20) du système à roue à rochet (17, 6c, 18, 6a) comprend un électroaimant (13) qui comporte un noyau mobile (13b) couplé mécaniquement au cliquet d'alimentation (17), et un moyen à ressort (20) en opposition à l'électroaimant (13) et étant aussi couplé au cliquet d'alimentation (17).

7. Magasin selon la revendication 6, caractérisé en ce que le couplage mécanique entre le noyau mobile (13b) de l'électroaimant (13) et le cliquet d'alimentation (17) est assuré par une tige (16) coulissant transversalement à l'axe du tambour (4) entre une position de repos et une position d'actionnement, et par un bras d'un levier (15) qui est articulé à une extrémité autour d'un axe (15a) fixe par rapport au tambour, qui engage à l'autre extrémité la dite tige coulissante (16) et qui est couplée par son milieu au noyau mobile (13b) de l'électroaimant (13), le cliquet d'alimentation (17) étant articulé sur la tige coulissante (16) dans une position telle qu'il engage le premier pignon (6c) quand la tige coulissante (16) subit un déplacement de la position de repos vers la position d'actionnement.

8. Magasin selon la revendication 7, caractérisé en ce que le cliquet (18) de roue à rochet est articulé sur le tambour (4) dans une position fixe et engage la tige coulissente (16), la dite tige coulissante (16) étant conformée pour déplacer le cliquet (18) de roue à rochet d'une position d'engagement du pignon respectif (6a) à une position de dégagement.

9. Magasin selon la revendication 7 ou 8, caractérisé en ce que le dit moyen (13-19, 6a, 6c) pour régler la rotation du tambour (4) comprend un cliquet de sécurité (19) pour roue à rochet conçu pour engager le premier pignon (6c), la tige coulissante (16) étant configurée pour engager, dans l'état d'actionnement, le dit cliquet de sécurité (19) pour roue à rochet et le maintenir engagé dans le premier pignon (6c).

10. Magasin selon l'une quelconque des revendications 5 à 9, caractérisé en ce que les dits cliquets (17, 18, 19) sont configurés et montés de façon à être maintenus par gravité dans leurs positions d'engagement respectives.

11. Magasin selon l'une quelconque des revendications précédentes, caractérisé en ce qu'il comprend de plus un moyen (6b,21) pour capter la position angulaire du tambour (4).

12. Magasin selon la revendication 11, caractérisé en ce que le dit moyen (6b, 21) pour capter la position angulaire du tambour (4) comprend, à la périphérie de ce dernier, un moyen pour marquer l'indication de tours et plusieurs moyens (6b) pour marquer des indications de pas à des intervalles réguliers correspondant à ceux existant entre les poches (4a) du tambour (4), ainsi qu'un premier mico-interrupteur (21a) conçu pour être actionné par le dit moyen marquant une indication de tour, et un second micro-interrupteur (21b) conçu pour être actionné par le dit moyen (6b) marquant des indications de pas.

13. Unité électromécanique comprenant un magasin en forme de tambour rotatif selon les revendications précédentes, caractérisé en ce qu'elle comprend un dispositif de reconnaissance de la valeur des pièces de monnaie ou des jetons, un moyen à mémoire emmagasinant une information relative au montant à payer, et un ensemble logique de commande relié au dit moyen à mémoire, aux dits capteurs photoélectriques (11, 26) du conduit d'alimentation (9) et du conduit de ramassage (25), aux dits micro-interrupteurs (21) actionnés par les moyens (6b) de marquage d'indication de tour et de pas, au dit électroaimant (23) actionnant un cliquet d'alimentation (17), et au dit électroaimant (23) actionnent le dispositif de commutation (7, 7a, 8), le dit ensemble logique de commande étant de plus conçu pour assurer les opérations suivantes : alimentation de l'électroaimant (13) qui actionne le cliquet d'alimentation (17) en réponse à un signal provenant du capteur (11) du conduit d'alimentation (9) ; corrélation de la valeur de la pièce de monnaie ou du jeton à la position angulaire de la poche respective (4a) dans laquelle est contenue la dite pièce de monnaie ou jeton ; comparaison de la valeur des pièces de monnaie ou des jetons reçues dans le tambour (4) au montant à payer ; et excitation de l'électroaimant (23) pour actionner le dispositif (7, 7a, 8) de commutation comme résultat de la dite comparaison.
